**Europäisches Patentamt**

(19) **European Patent Office**

**Office européen des brevets**

(11) Veröffentlichungsnummer: **0 009 263**
**B1**

(12) EUROPÄISCHE PATENTSCHRIFT

(45) Veröffentlichungstag der Patentschrift:
07.07.82

(51) Int. Cl.³: **G 01 M 3/28**

(21) Anmeldenummer: **79103637.9**

(22) Anmeldetag: **25.09.79**

(54) Verfahren zur Überprüfung auf Leckverluste sowie dabei verwendbarer Messchacht.

(30) Priorität: **25.09.78 DE 2841674**

(43) Veröffentlichungstag der Anmeldung:
**02.04.80 Patentblatt 80/7**

(45) Bekanntmachung des Hinweises auf die Patenterteilung:
**07.07.82 Patentblatt 82/27**

(84) Benannte Vertragsstaaten:
**AT BE CH FR GB IT**

(56) Entgegenhaltungen:
**DE-A-2 807 632**
**DE-C- 620 633**
**US-A-1 693 737**

(73) Patentinhaber: **Heide, Gerhard, Willbeckerstrasse 30, D-4006 Erkrath 2 (DE)**

(72) Erfinder: **Heide, Gerhard, Willbeckerstrasse 30, D-4006 Erkrath 2 (DE)**

(74) Vertreter: **Melzer, Wolfgang, Dipl.-Ing., Bärenmühlweg 31, D-8120 Weilheim i.OB (DE)**

## Verfahren zur Überprüfung auf Leckverluste sowie dabei verwendbarer Messschacht

Die Erfindung betrifft ein Verfahren zur Überprüfung eines vermaschten Leitungsnetzes, wie insbesondere eines öffentlichen Trinkwasserleitungsnetzes, auf Leckverluste gemäss dem Oberbegriff des Anspruchs 1, sowie einen bei der Durchführung des Verfahrens verwendbaren einbaubaren vorgefertigten Messschacht.

Bei öffentlichen Trinkwasserleitungsnetzen treten u.U. erhebliche Verluste aufgrund von Rohrbrüchen, Undichtigkeiten u.dgl. auf. Solche Undichtigkeiten können witterungsbedingt sein, d.h., dass nach Zeiten grosser Trockenheit oder starken Frostes die Leckverluste ansteigen. Leckverluste dieser Art sind oft nicht erkennbar, da die Leitungen im allgemeinen erdverlegt sind, und treten immer wieder von neuem auf. Unter Verlusten ist bei Trinkwasserleitungsnetzen die Wassermenge zu verstehen, die sich aus der Differenz der dem Leitungsnetz zugeführten Wassermenge und der den Verbrauchern in Rechnung stellbaren Wassermenge ergibt.

Das eingangs genannte Verfahren wurde bereits vorgeschlagen (vgl. ältere, nicht vorveröffentliche Patentanmeldung entsprechend der DE-A-2 807 632). Bei diesem Verfahren wird aus dem Leitungsnetz ein vermaschtes Unter-Leitungsnetz mittels Schiebern abgetrennt, das dann von dem Leitungsnetz über eine Messleitung versorgt wird, in der die mindestens eine Durchflusseigenschaft erfasst wird. Dieses vorgeschlagene Verfahren geht von der Erkenntnis aus, dass in dem Unter-Leitungsnetz dann kein Leck vorhanden ist, wenn irgendeinmal ein Durchflusswert Null erfasst wird, was dann der Fall ist, wenn alle Verbraucher zufällig in dem Unter-Leitungsnetz den Wasserverbrauch eingestellt haben (sog. Null-Verbrauch). Ein Leck wird also dann angenommen, wenn zwar ein Null-Verbrauch gemessen wird, aber kein Null-Durchfluss angezeigt wird. Selbst während verbrauchsarmer Zeiten, wie während der Nacht, ist das Auftreten dieses Null-Verbrauches nicht voraussagbar. Damit innerhalb einer vernünftigen Messzeit ein derartiger Null-Verbrauch erwartet werden kann, muss das abgetrennte Unter-Leitungsnetz vergleichsweise klein sein, in der Praxis etwa bei 60 Wohneinheiten. Weiter wird durch das vorgeschlagene Verfahren in die natürliche Wasserversorgung eingegriffen (Änderung des Versorgungsdrucks, Umkehr der Strömungsrichtung, Wassertrübung). Ferner ist bei dem vorgeschlagenen Verfahren eine relativ häufige Sterilisierung von Anschlussstücken, Schläuchen usw. nötig.

Das vorgeschlagene Verfahren zeigt sich somit als lediglich gelegentlich und in kleinen Messgebieten anwendbar, weshalb es auch ortsbeweglich in einem Kraftwagen untergebracht werden soll und zum Anschluss an durch Schieber voneinander trennbare Hydranten ausgebildet sein soll.

Dem vorgeschlagenen Verfahren haftet somit der Nachteil an, dass eine bestimmte Stelle des Leitungsnetzes nur in sehr grossen Zeitabständen, zumeist einmal pro Jahr oder alle zwei Jahre, überprüft wird, wobei anderseits bereits unmittelbar nach der Überprüfung an dieser Stelle erneut ein Leck auftreten kann, das dann erst bei der nächsten Überprüfung festgestellt werden kann. Insbesondere bei neuverlegten und vor der Inbetriebnahme auf Richtigkeit überprüften Leitungssystemen ist dieser Nachteil gravierend, da die Überprüfung derartiger Leitungssysteme meist erst nach einigen Jahren begonnen wird. Das vorgeschlagene Verfahren hat ferner den Nachteil, dass solche Messungen in dem gesamten Leitungsnetz durchgeführt werden müssen, d.h. auch dort, wo keine Verluste vorliegen.

Eine ständige stationäre, bzw. oftsfeste Anwendung des vorgeschlagenen Verfahrens verbietet sich, abgesehen davon, dass es bei zahlreichen Leitungsnetzen nicht anwendbar ist, oft schon aus hydraulischen Gründen oder wegen der notwendigen Verfügbarkeit einer Mindest-Feuerlöschmenge, was nur mit erheblichem technischen Aufwand erreichbar wäre. Weiter verbietet sich die ständige ortsfeste Anwendung auch aus wirtschaftlichen Gründen wegen der geringen Anzahl von Wohneinheiten pro abzutrennendem Unter-Leitungsnetz. Das vorgeschlagene Verfahren ist somit den Feinortungsverfahren zuzuordnen.

Die bei öffentlichen Trinkwasserleitungsnetzen festgestellten Verluste können 10% deutlich übersteigen, insbesondere wenn es sich um nichtsanierte Altbaugebiete oder um einen geologisch problematischen Untergrund handelt. Da das Trinkwasser unter Aufwendung erheblicher Kosten gefördert und häufig aufbereitet werden muss (beispielsweise mittels Entsalzungsanlagen od.dgl.), sind die volkswirtschaftlichen Verluste erheblich, weshalb der möglichst unmittelbaren Leckerfassung erhebliche Bedeutung zukommt.

Zum Feststellen von Verlusten ist es bekannt (DE-C-620 633), mittels eines über das Leitungsnetz selbst übertragenen Signals, wie eines Druckstosses, Haushalts-Wasserzähler zum gleichzeitigen Ausdrucken eines Messwertes auszulösen, wobei dann alle Messwerte nach Einsammeln oder Ablesen aller Ausdrucke ausgewertet werden. Abgesehen davon, dass dadurch keine Aussage über den genauen oder ungefähren Ort eines Lecks gegeben werden kann, ist die Auswertung u.U. erst nach einem erheblichen Zeitraum möglich, da die Tendenz dahingeht, die Haushalts-Wasserzähler nurmehr einmal jährlich ablesen zu lassen. Ausserdem ergeben die Messungenauigkeiten aufgrund ungenauer Haushalts-Wasserzähler ein falsches Bild über die tatsächlichen Verluste (sog. Schleichverluste).

Zum Feststellen eines Lecks in einer Rohrleitung ist es weiter bekannt (US-A-1 693 737), die Rohrleitung vom übrigen Rohrleitungsnetz abzuschieben und unter Druck einen Farbstoff einzuspeisen. Zeitlich und örtlich sequentiell werden dann Abnahmepunkte daraufhin untersucht, ob bei Öffnung an ihnen Farbstoff austritt. Das zu erfassende Leck liegt dann zwischen dem letzten Abnahmepunkt, an dem kein Farbstoff austrat. Dieses Verfahren ist somit ebenfalls den Feinortungsverfahren zuzuordnen.

Bei Erdöl od.dgl. umweltschädigenden Medien ist es bekannt, eine Überwachung von Leitungen auf Leckverluste und die Ortung der Lecks mittels Kontrollstellen im Verlauf der Leitungen durchzuführen, in denen Durchflusseigenschaften, wie Durchflussmenge, Durchflussrichtung, Durchflussgeräusch, Fluiddruck od.dgl. ständig und kontinuierlich oder quasi-kontinuierlich (z.B. im Multiplex) erfasst und ausgewertet werden (vgl. z.B. Z. 3R international 15. Jg. (Juli 1976) H.7, S. 375–381; Z. TÜ 11 (Juni 1970) Nr. 6, S. 213–215; Z. Öl-Zeitschrift für die Mineralölwirtschaft, (1979), S. 2–6). Die bei Erdöl-Pipelines bekannten Verfahren sind bei vermaschten Leitungsnetzen, in denen die Leitungslänge zwischen Verzweigungs- und Abnahmepunkten mitunter nur wenige Meter beträgt, nicht nur aus praktischen Gründen, sondern auch aus Kostengründen nicht anwendbar, es müsste nämlich ein auch unter Berücksichtigung von Hausanschlüssen abzweigfreier Leitungsabschnitt 24 Stunden täglich kontinuierlich geprüft und ausgewertet werden. Diese Informations- und Datenflut wäre auch mittels Grossrechner praktisch nicht mehr verarbeitbar.

Es ist daher Aufgabe der Erfindung, das vorgeschlagene Verfahren der eingangs genannten Art so auszubilden, dass Lecks in vermaschten Leitungsnetzen möglichst schnell und kostengünstig erfasst werden können.

Die Aufgabe wird durch die kennzeichnenden Merkmale des Anspruchs 1 gelöst.

Die Erfindung geht dabei von der Erkenntnis aus, dass das Verbraucherverhältnis einen bestimmten sich wiederholenden Rhythmus besitzt, d.h. regelmässigen Gesetzmässigkeiten unterliegt, während die Verluste an einem Leck im wesentlichen konstant bleiben. Weiter geht die Erfindung von der Erkenntnis aus, dass Lecks das Durchflussverhalten nicht nur in dem kurzen Leitungsabschnitt zwischen zwei Verzweigungspunkten beeinflussen, sondern auch Einfluss auf benachbarte Leitungen, also auf ein wiedervermaschtes Unter-Leitungsnetz des gesamten Leitungsnetzes nehmen. Weiter beruht die Erfindung auf der Erkenntnis, dass im Gegensatz zur gelegentlichen Null-Verbrauchsmessung die Messung und regelmässige Beobachtung der Summe aus Verbrauch und Verlusten an Kontrollstellen selbst in Versorgungssystemen mit einem wenig oder gar nicht ausgeprägten Minimumverbrauch durch die regelmässige Beobachtung stündlicher oder täglicher oder wöchentlicher Gesamtverbrauchswerte ein häufige und zuverlässige, wenn auch grobe Beurteilung von Wasserverlusten zulässt. Letzteres ist vielfach zunächst die einzige Möglichkeit einer permanenten Wasserverlustkontrolle in Kontrollzonen bei sog. «intermittierend», d.h. nur stundenweise, betriebenen Wasserversorgungssystemen, wie sie in manchen Ländern, insbesondere aussereuropäischen Ländern wie Ländern Asiens und Südamerikas vorliegen.

Das erfindungsgemässe Verfahren ermöglicht es insbesondere bei Versorgungssystemen mit ausgeprägtem Nachtverbrauch ein Leck bereits kurz nach dessen Entstehen festzustellen und zumindest bezüglich seiner Lage in einem Unter-Leitungsnetz zü lokalisieren. Weiter kann das Leck auch seiner Grösse nach, d.h. seinem Verlust nach, bestimmt werden, so dass ausgehend davon entschieden werden kann, wann ein und ggf. welches Feinortungsverfahren durchgeführt werden soll, wobei es sich bei diesem Feinortungsverfahren auch um das eingangs genannte vorgeschlagene Verfahren handeln kann. Der genaue Ort des Lecks kann auch durch schrittweise Wiederholung des erfindungsgemässen Verfahrens mittels nur wahlweise in Betrieb setzbarer Kontrollstellen näher eingegrenzt und auch festgestellt werden. Da weiter ein Messzeitraum zur Erfassung des Durchflussverhaltens herangezogen wird, während dem der Verbrauch statistisch gesehen wenig schwankt, wobei es sich zweckmässigerweise um verbrauchsarme Zeiten wie das Nachtminimum handelt, ist die Empfindlichkeit bei der Leckerkennung stark vergrössert, d.h. es können sehr geringe Lecks erfasst werden. Die zur Erfassung verwendeten Messgeräte sind in ihrem Mess- und damit auch in ihrem Empfindlichkeitsbereich auf den statistisch gesehen im wesentlich konstanten und in den meisten Fällen auch geringen Pegel abstimmbar. Der begrenzte Messzeitraum und damit die Betriebszeit des Messgerätes richtet sich nach der Zeitdauer dieses statistischen Durchflussverhaltens und ist innerhalb dieser Zeitdauer frei wählbar und wird bei bekanntem konstanten Durchfluss (z.B. Nachtverbrauch) im allgemeinen etwa eine halbe Stunde nicht überschreiten. Es werden somit an den Kontrollstellen nur wesentliche Daten erfasst. Damit sind die bei der Auswertung zu verarbeitenden Informationen und Daten überschaubar. Weiter wird auch eine kostengünstige Fernübertragung des Messergebnisses aus einem kurzen, begrenzten Messzeitraum wie über das öffentliche Fernmeldenetz in das Wasserwerk unter Ausnutzung nachrichtentechnisch verkehrsamer Zeiten möglich.

Ganz allgemein gilt, dass der Messzeitraum umso kürzer sein kann, je konstanter der Verbrauch pro Zeiteinheit ist, der mit einem bestimmten Rhythmus wiederkehrt und dann (ohne Leck) stets gleich gross ist.

Der erfindungsgemäss begrenzte (kurze) Messzeitraum hat zur Folge, dass die Zeit für die Messwertübertragung begrenzt und ebenfalls kurz ist, wodurch sich ein geringer Stromverbrauch für die verwendeten Geräte ergibt, was wiederum einen Batteriebetrieb ermöglicht.

Weitere Vorteile aufgrund der Früherkennung von Lecks sind darin zu sehen, dass eine hydraulische Rohrnetzübertragung möglich wird, dass Folgeschäden durch die Früherkennung von Lecks vermieden werden und dass Messwerte zur Kontrolle der Wasserqualität verwendbar sind.

Als besonders günstige Orte für Kontrollstellen sind solche anzusehen, an denen eine Durchflussrichtungsumkehr aufgrund der Verbrauchergewohnheiten und damit regelmässig auftritt.

Die Auswertung der Messungen kann dabei sowohl vorort als auch in einer Zentrale erfolgen.

Vorteilhaft bei dem erfindungsgemässen Verfahren ist weiter, dass auch bestehende Lecks erfasst werden können, wobei allerdings zunächst ein statistischer durchschnittlicher Pegel der gemessenen Durchflusseigenschaft für den Zeitraum der Kurzzeitmessung festgestellt werden muss, wobei dann ausgehend von dem tatsächlich festgestellten Messwert ggf. auf das Vorliegen eines bereits bestehenden Lecks geschlossen werden kann. Dieses kann dann mittels herkömmlicher Verfahren in seiner genauen Lage bestimmt werden.

Zur Durchführung des erfindungsgemässen Verfahrens ist zur Bildung einer Kontroll- bzw. Messstelle ein einbaubarer vorgefertigter Messschacht gemäss dem Anspruch 9 von besonderem Vorteil. Es ist möglich, einen derartigen Messschacht schnell zu installieren und auch auf die jeweils interessierende Durchflusseigenschaft umzurüsten bzw. Art und Funktion der Messung je nach Bedarf zu ändern. Weiter kann durch einen derartigen Messschacht ein trockener und frostfreier Raum für die u.U. empfindlichen elektronischen Mess- und Messverarbeitungsgeräte erreicht werden.

Die Erfindung wird durch die weiteren in den Unteransprüchen gekennzeichneten Massnahmen vorteilhaft weitergebildet.

Die Erfindung wird im folgenden anhand der in der Zeichnung dargestellten Ausführungsbeispiele näher erläutert. Es zeigen:

Fig. 1 schematisch eine Darstellung eines vermaschten Leitungsnetzes, bei dem die Erfindung angewendet wird,

Fig. 2 im Schnitt einen vorgefertigten einbaubaren Messschacht,

Fig. 3 den Schnitt III–III in Fig. 2,

Fig. 4 eine Einzelheit des Messschachts gemäss Fig. 2,

Fig. 5 eine Ausbildungsalternative eines Teils des Messschachts gemäss Fig. 2,

Fig. 6, 7 im Längsschnitt bzw. im Querschnitt eine andere Ausbildung einer Kontrollstelle.

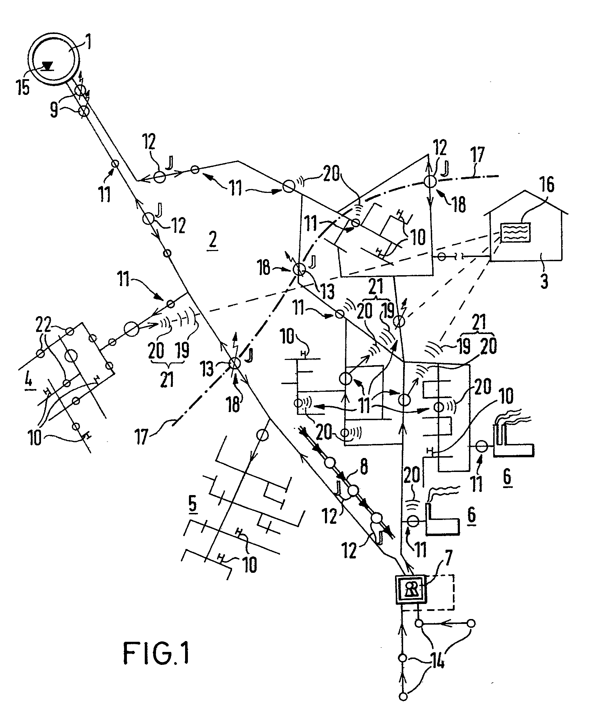

Das in Fig. 1 schematisch dargestellte öffentliche Trinkwasserleitungsnetz 2 besitzt typischen Aufbau. Aufbereitetes Trinwasser wird dem Wassernetz 2 einerseits von einem Hochbehälter 1 zugeführt, dessen Pegelstand mittels einer Messeinrichtung 15 erfasst wird. Anderseits erhält das Wassernetz 2 Wasser von einer Pumpstation mit Erdbehälter 7, der Wasser von Versorgungsbrunnen 14 zugeführt wird. Dem Wassernetz 2 ist weiter als Zentrale ein Wasserwerk 3 zugeordnet. Das Wassernetz 2 weist als typische Bestandteile ein Altstadtgebiet 4, ein Neubaugebiet 5 sowie Industriegebiete 6 auf. Weiter ist schematisch ein Leitungsstück eines Abwasserkanals 8 dargestellt, der Teil eines ähnlichen Kanalisationsnetzes bildet. Pfeile in den Leitungen des Wassernetzes 2 geben die übliche Strömungsrichtung des fliessenden Trinkwassers an.

In dem Wassernetz 2 sind verschiedenartige Mess- und Kontrollstellen angeordnet, die zur Durchführung der Erfindung verwendet werden können.

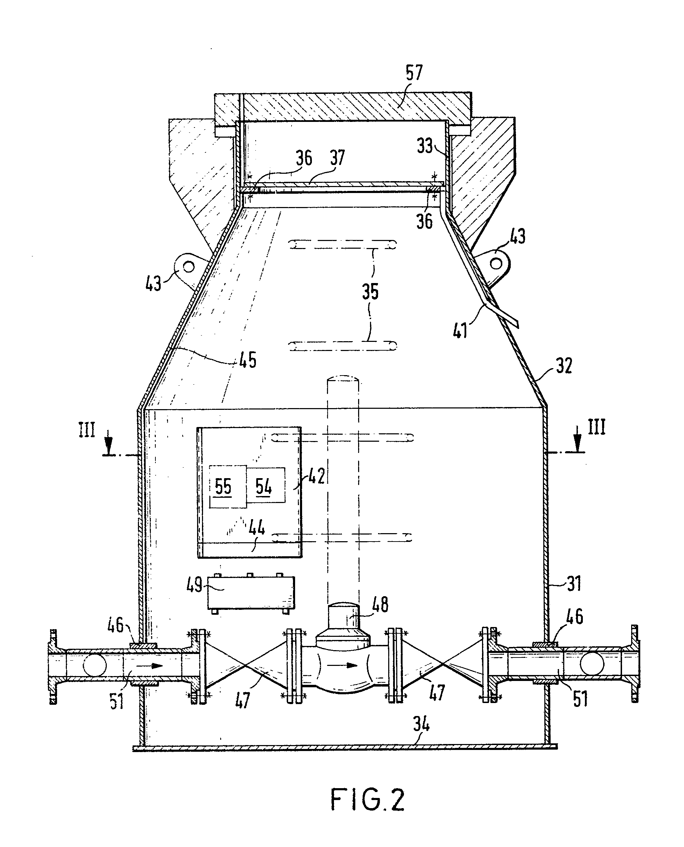

Insbesondere sind vorgesehen Kontrollstellen 9 mit induktiver Messung, als Kontrollstellen ausgebildete oder ausbildbare Hydranten 10 und als Kontrollstellen ausgebildete Messschächte, wie sie in den Fig. 2–5 dargestellt werden.

Dabei sind Kontrollstellen 12 vorgesehen, in denen eine Messung in zwei Richtungen durchgeführt wird, wie das durch das Symbol J dargestellt ist, sowie Kontrollstellen 13, bei denen eine induktive Messung in zwei Richtungen durchgeführt wird, wie das durch ein Pfeil-Symbol erläutert ist. Einige Kontrollstellen 18 sind dabei längs einer Linie vorgesehen, die durch bezüglich des Strömungsverhaltens Wendepunkte des Leitungsnetzes hindurchgeht, wie das durch die Strichlinie 17 dargestellt ist.

Wie das bei einigen Kontrollstellen dargestellt ist, werden die dort erfassten Messwerte zur Zentrale 3 übertragen und auf einem schematisch dargestellten Mehrfachschreiber 16 aufgezeichnet. Die Messwertübertragung kann dabei drahtlos erfolgen, wie das durch das Symbol 19 dargestellt ist. Ein örtliches Signal 20, das anzeigt, dass an der entsprechenden Kontrollstelle 11 der Durchschnittswert der Durchflusseigenschaft während der Kurzzeitmessung überschritten worden ist, kann isoliert, aber auch zusammen mit der Messsignalübertragung 19 zur Zentrale 3, wie das durch 21 wiedergegeben ist, vorgesehen sein.

Wie sich das aus Fig. 1 weiter aufgrund der schematischen Darstellung ergibt, sind einige der Kontrollstellen 11 so ausgebildet, dass sie ständig in Betrieb sind, d.h., also die Kurzzeitmessung regelmässig durchführen, während andere Kontrollstellen erst dann in Betrieb genommen werden, wenn die ständig betriebenen Kontrollstellen ein Leck im durch sie überwachten Kontrollbezirk anzeigen. In gleicher Weise können die Hydranten 10 auch erst dann als Kontrollstelle 22 verwendet werden, wenn die ständig betriebene Kontrollstelle 11 des jeweiligen Kontrollbezirks ein Leck anzeigt. Dies ist besonders deutlich im Altstadtgebiet 4 zu sehen, das einerseits stark vermascht ist, das anderseits auch stark für die Entstehung von Lecks anfällig ist.

Es hat sich gezeigt, dass das Verbrauchsverhalten zwar in verbrauchsfreien Zeiten sehr stark unterschiedlich und schwankend sein kann, dass es aber verbrauchsarme Zeiten gibt, während denen das statistische Verbrauchsverhalten praktisch keinen Schwankungen unterworfen ist. Als besonders günstig sind in Wasserversorgungssystemen mit 24-h-Versorgung dabei die frühen Morgenstunden zwischen 1.00 Uhr und 3.00 Uhr (im Ausland häufig zwischen 4.00 und 6.00 Uhr) anzusehen, in denen die Wasserverluste den normalen Nachtverbrauch z.T. erheblich übersteigen, so dass Messungen in diesen verbrauchsarmen Zeiten besonders effizient durchgeführt werden können. Es genügt eine Kurzzeitmessung von etwa einer halben Stunde täglich oder auch wöchentlich während dieser Zeit, um zu sehr genauen Aussagen über Lecks in dem jeweils überwachten Kontrollbezirk zu gelangen. Da während dieser verbrauchsarmen Zeiten die gemessene Durchflusseigenschaft statistisch sehr konstant und ohne starke Schwankungen ist und die verwendeten Messgeräte nur während dieser Kurzzeitmessung betrieben werden, können vergleichsweise kleine Lecks erfasst werden, die zwar auf den Pegel der Durchflusseigenschaft während der Hauptverbrauchsstunden praktisch keinen Einfluss besitzen, die jedoch bei dem vergleichsweise niedrigen Pegel während der Kurzzeitmessung erfassbar sind. Durch Auswahl geeigneter Messgeräte können Lecks mit einem Verlust von weniger als 0,5 m³/h festgestellt werden, wenn die Durchflusseigenschaft sich durch besondere Gleichmässigkeit auszeichnet, wie z.B. in reinen Wohngebieten.

Das erfindungsgemässe Verfahren ist auch zur Feststellung und Lokalisierung alter, bereits bestehender Lecks geeignet, d.h., solcher Lecks, die bereits vor dem Einbau der Kontrollstellen 11 vorhanden waren. Dabei wird u.a. auch von der Erkenntnis ausgegangen, dass ein Leck, aber auch die Beseitigung eines Lecks, erhebliche und weitreichende Auswirkungen auf die Durchflusseigenschaften in zumindest einem Teilnetz, das nicht mit dem Kontrollbezirk übereinstimmen muss, besitzt, so dass auf diese Weise fortschreitend auch bestehende Lecks bereits nach Vorsehen der Kontrollstellen bzw. nach Einbau der Messschächte in einem vermaschten Netz erkannt und anschliessend beseitigt werden können. Dabei muss allerdings bei der Auswertung der Messergebnisse zur Feststellung des alten Lecks etwas anders vorgegangen werden als bei der Auswertung der Ergebnisse zur Feststellung neuentstandener Lecks.

Zunächst ist die Ermittlung eines durchschnittlichen Wasserverlustwertes des gesamten vermaschten Rohrleitungsnetzes, d.h., des Wassernetzes 2, erforderlich, der sich aus dem bei einer Jahresabrechnung ermittelten Gesamtjahresverlust, umgerechnet in m³/h, und der Länge des Wassernetzes 2 ergibt. Daraus ist für jeden Kontrollbezirk und damit für jede Kontrollstelle 11 ein individueller durchschnittlicher Verbrauchswert während der kurzen Messzeit ermittelbar. Ausgehend von der Abweichung des gemessenen Ist-Verbrauchswertes und des vorgegebenen durchschnittlichen Verbrauchswertes, kann auf die Wasserverluste des Kontrollbereiches geschlossen werden. Dann kann, ausgehend von der Feststellung der Grössenordnung der Verluste im Kontrollbereich, durch herkömmliche Ortungsverfahren die verlustbehaftete Rohrnetzstrecke und letztendlich die Leckstelle gefunden werden.

Als herkömmliche Verfahren zur Feinortung eines Lecks sind anzusehen: (i) das sogenannte Abschiebern, d.h., das Abtrennen von Teilstrekken innerhalb des vermaschten Teilnetzes, (ii) das sogenannte Abhorchen mittels ortsbeweglicher Messeinrichtungen von der Erdoberfläche aus, (iii) das künstliche Erzeugen von Durchflussänderungen, beispielsweise durch Erzeugen eines Druckstosses und Auswertung der sich deshalb ergebenden Änderungen der Messwerte, (iv) das Aufgraben, d.h. Freilegen der Leitung und Sichtüberprüfung, wobei letztere Vorgehensweise aus Kostengründen erst dann durchgeführt werden sollte, wenn der Ort des Lecks auf einen vergleichsweise kurzen Leitungsabschnitt eingeschränkt worden ist, zumal zur Beseitigung des Lecks sowieso aufgegraben werden muss, (v) die Messung von Schalleigenschaften der Leckstellen an Rohrleitungskontaktpunkten.

Während es bei der Errichtung von neuen Leitungsnetzen in beispielsweise Neubaugebieten möglich ist, den Ort der Kontrollstelle 11 bereits bei der Planung vorzusehen, kann es bei bereits bestehenden Leitungsnetzen wie in Altbaugebieten 4 neben dem gezielten Vorsehen an bestimmten Stellen zweckmässig sein, Kontrollstellen an der Stelle erfasster und aufgegrabener Lecks anzuordnen, da dann die Tatsache, dass eine Baugrube besteht, sinnvoll und kostengünstig ausgenutzt werden kann. Bei solchen Kontrollstellen kann es sich um weitere Kontrollstellen handeln, die bei Feststellung eines Lecks im Unterleitungsnetz zusätzlich zur Erkennung und Ortung des Lecks ständig und kontinuierlich überwacht werden.

Zur Ortung von Lecks ist es zweckmässig, Kontrollstellen 11 so im Wassernetz 2 vorzusehen, dass der überwachte Kontrollbezirk je nach Art und Zustand der jeweiligen Leitungen eine bestimmte Rohrleitungslänge umfasst. Falls der Kontrollpunkt eine Kontrollstelle 18 ist, an der das Wasser in unterschiedlichen Richtungen fliesst, kann demgegenüber eine grössere Rohrleitungslänge überwacht werden.

Es sei bemerkt, dass sich das erfindungsgemässe Verfahren auch zur Überwachung von Netzen eignet, die mittels der herkömmlichen Verfahren praktisch nicht überwachbar sind, wie beispielsweise Netzteile mit Leitungen aus nichtmetallischen Werkstoffen (Asbestzement od.dgl.).

Als Kontrollstellen können bereits bestehende Einsteigschächte und auch Hydranten (Kontrollpunkte 10, 22) verwendet werden, an denen lediglich die erforderlichen Messgeräte vorgesehen werden müssen. Falls aus Platzgründen lediglich der Messfühler vorgesehen werden kann, kann das Messgerät auch in bei anderen Rohrleitungsnetzen vorgesehenen Schächten vorgesehen sein, wie bei Stromversorgungs- und Kanalisationssystemen, wie das im Zusammenhang mit dem Teil 8 der Kanalisation in Fig. 1 dargestellt ist.

Von besonderem Vorteil ist es, wenn vorgefertigte einbaubare Messschächte für die Kontrollstellen 11, 18 vorgesehen werden, die einen für die Aufnahme empfindlicher, z.B. elektronischer Mess- und Messwertverarbeitungsgeräte geeigneten trockenen und frostfreien Innenraum haben.

Ein solcher einbaubarer vorgefertigter Messschacht ist in Fig. 2–5 dargestellt.

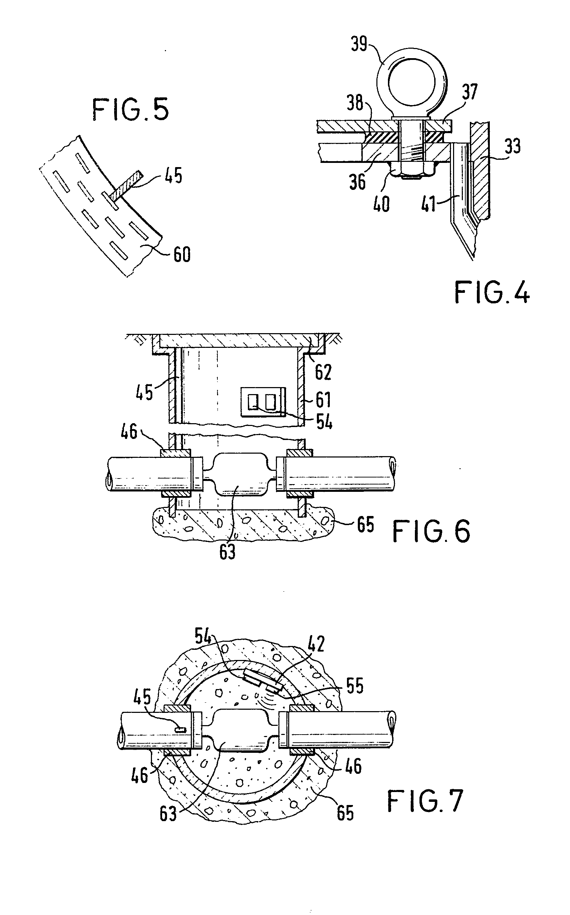

Ein solcher Messschacht besteht beispielsweise aus einem Zylindermantel 31, einem Konusmantel 32 und einem Mantelhals 33, die untereinander sowie mit einem Boden 34 verbunden, beispielsweise, wenn es sich um schweissbares Material, wie Stahlblech, handelt, verschweisst sind. Wie in Fig. 5 dargestellt, kann der Mantel auch aus einem stahlverstärkten Kunststoff wie GFK (glasfaserverstärkter Kunststoff) bestehen. Für den Zugang zum Inneren des Messschachtes sind an der Wand Steigeisen 35 vorgesehen. Bei dem in Fig. 2 dargestellten Ausführungsbeispiel ist im Deckelhals ein Ringflansch 36 angeschweisst, auf dem ein Deckel 37 in der in Fig. 4 dargestellten Weise befestigt werden kann. Dazu ist zwischen dem Deckel 37 und dem Flansch 36 eine Dichtung 38 vorgesehen, wobei der Deckel 17 mittels die Dichtung 38 und den Flansch 36 durchsetzender Ringschrauben 39, die in am Flansch 36 angeschweissten Muttern 40 eingreifen, mit dem Flansch 36 dicht verbindbar ist. Zur Ableitung von oberhalb des Deckels 17 zufliessendem Wasser, wie Regenwasser, ist am Rand ein Regenablaufrohr 41 vorsehbar, das das zufliessende Wasser nach ausserhalb des Mantels 31, 32, 33 abführt. An der Aussenseite des Mantels, insbesondere am Mantelkonus 32, sind Transportösen 48 angebracht, mittels denen der Messschacht von der Lagerstelle zur Einbaustelle transportiert und in die dort gebildete Baugrube abgesenkt werden kann.

An der Innenseite des Messschachtes ist eine Konsole oder Messtafel 42 angebracht, wobei, wie dargestellt, eine Silikagel-Kammer 44 vorgesehen sein kann, die besonders für Messschächte in Tropenausführung zweckmässig ist. Insbesondere bei Messschächten mit Kunststoffmantel ist ein Kontaktstreifen 45 vorgesehen, der als ein Signalgeber nach ausserhalb des Messschachtes führbar und damit auch von ausserhalb abtastbar ist, wie das in Fig. 2 schematisch dargestellt ist.

Die zu überwachende Rohrleitung des Leitungsnetzes 2 (Fig. 1) wird in den Messschacht hineingeführt und wieder aus diesem herausgeführt. An der Durchgangsstelle durch den Mantel 31 ist dabei eine Rostschutzeinrichtung 46, wie beispielsweise eine entsprechende Rostschutzpaste, vorgesehen. Die Durchführung kann dabei wie dargestellt mittels Rohrstutzen 51 erfolgen, die mit dem Blechmantel 31 verschweisst sind. Im Verlauf der zu überwachenden Leitung, d.h. zwischen den beiden Rohrstutzen 51, die den Mantel 31 durchsetzen, ist zwischen zwei Schiebern 47 eine Messeinrichtung 48 wie ein Durchflusszähler od.dgl. vorgesehen, wobei diese Messeinrichtung 48, wie durch eine Strich-Punkt-Linie dargestellt, durchaus unterschiedliche Bauhöhe innerhalb des Messschachtes besitzen kann, abhängig von einerseits der Messgrösse, andererseits dem vom zu erfassenden Pegel abhängigen Messbereich und der Empfindlichkeit. Parallel zu dieser durch die Rohrstutzen 51, die Schieber 47 und die Messeinrichtung 48 gebildeten Einrichtung kann ein Bypass 50 (eine sogenannte Umgehungsleitung) vorgesehen sein, die von dem Rohrstutzen 51 wie dargestellt ausserhalb des Mantels 31, aber auch, wenn es die Platzverhältnisse erlauben, innerhalb des Mantels 31 abzweigt und im Bedarfsfall ein Fliessen des überwachten Mediums ermöglicht, wie beispielswiese bei Wartungsarbeiten oder Austauscharbeiten an der Messeinrichtung 48. Der Bypass weist dabei in ähnlicher Weise Schieber 52 auf, die mit Blindflanschen 53 versehen sind. Im Bedarfsfall werden die Blindflanschen 53 durch ein Leitungsstück oder ein weiteres Messgerät ersetzt und anschliessend die Schieber 52 geöffnet.

In der Messtafel 42 befindet sich zumindest ein Messgerät für die durch die Messeinrichtung 48 erfasste Grösse. Verbindungsleitungen zwischen der Messeinrichtung 48 und der Messtafel 42 sind nicht dargestellt. Falls es sich um elektrisch arbeitende Messeinrichtungen 48 und Messgeräte 54 handelt, kann eine elektrische Stromversorgung, wie eine Batterie 49, im Messschacht vorgesehen sein. Auch hier sind die notwendigen Verbindungsleitungen und -kabel nicht dargestellt. Weiter befindet sich in der dargestellten Messtafel 42 ein Signalgeber 55, der auch als Messwertsender ausgebildet sein kann, um ein Signal wie ein Alarmsignal 20 (Fig. 1) nach ausserhalb des Messschachtes abzugeben, und/oder um ein Messwertsignal 19 (Fig. 1) zur Zentrale 3 (Fig. 1) fernzuübertragen. Diese Fernübertragung kann drahtlos erfolgen. Die Batterie 49 kann nachladbar oder wiederaufladbar ausgebildet sein.

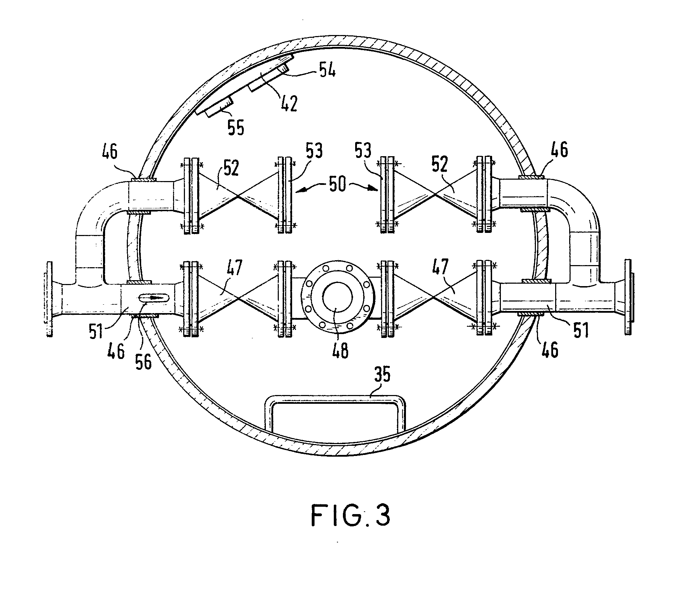

In Fig. 2 und 3 ist die Fliessrichtung des strömenden Mediums (Trinkwasser) durch einen Pfeil wiedergegeben. Das Durchflussverhalten in einer Fliessrichtung kann zusätzlich mittels eines Sensors 56 gemessen werden. Das durch den Sensor 56 erreichte Messergebnis kann in gleicher Weise zur Messtafel 42 geführt und von dort mit entsprechenden Messgeräten und Signalgebern ausgewertet bzw. übertragen werden. Das Messergebnis kann auch, wie in Fig. 2 angedeutet, über den Kontaktstreifen 45 nach ausserhalb geführt werden.

Schliesslich befindet sich am Oberende des Messschachtes eine übliche Schachtabdeckung 57, durch die eine Verbindung mit der Erdoberfläche erreicht ist und der Messschacht vor Umwelteinflüssen, Einwirkungen von Strassenverkehr, Nässe usw. geschützt ist.

Selbstverständlich kann der Messschacht auch quaderförmig ausgebildet sein und kann der Bypass 50 auch unterhalb der Hauptströmungsrichtung geführt werden. Weiter ist es auch möglich, mehrere Messtafeln 42 vorzusehen. Die Ausrüstung mit Messeinrichtung 48, Sensor 56, Messgerät 54 und Messgeber 55 sowie Batterie 49 hängt dabei von den Umständen des Einzelfalles, d.h. von dem Ort und den Strömungsverhältnissen an der jeweiligen Kontrollstelle, ab. Statt der Batterie 49 kann beispielsweise auch ein üblicher Stromanschluss vorgesehen sein.

Weiter ist in dem Messschacht zusätzlich ein Ultraschallmessgerät vorsehbar, um das Durchflussgeräusch zu erfassen.

Das Messgerät 54 kann aus mehreren Teilen bestehen, wie Integratoren, Impulsgebern, Zählern usw., die zur Auswertung der (analogen) Messergebnisse durch die Messeinrichtung 48, 56 dienen. Beispielsweise wird es zweckmässig sein, wenn der Signalgeber 55 ein Alarmsignal 20 nach ausserhalb des Messschachtes erst dann abgibt, wenn während mindestens zweier aufeinanderfolgender kurzer Messzeiten die Alarmbedingung erfüllt ist. Dadurch kann verhindert werden, dass zufällige Überschreitungen des konstanten Verbrauches während verbrauchsarmer Zeiten (beispielsweise während der Sylvesternacht) als Auftreten eines Lecks identifiziert werden.

Wie bereits erwähnt, wird lediglich eine bestimmte Anzahl der Kontrollstellen bzw. Kontrollpunkte 11, 18 ständig zur Durchführung der Kurzzeitmessung betrieben. Insbesondere bei den Kontrollstellen 18 längs der Strich-Punkt-Linie 17 werden mehr als eine Messung durchgeführt werden. Andere Kontrollstellen 11 im Wassernetz 2 werden nicht ständig betrieben, sondern nur dann, wenn eine der ständig betriebenen Kontrollstellen 11, 18 bzw. einer der Kontrollpunkte ein Leck im jeweils überwachten Kontrollbezirk festgestellt hat. Falls die letzteren Kontrollstellen mit Messgeräten und Messeinrichtungen versehen sind, kann deren Betrieb selbstverständlich ferngesteuert ausgelöst werden. Als Kontrollstelle 11 der letzteren Art eignen sich auch Hydranten 10, die als Kontrollpunkt 22 ausgebildet sind. Ein Kontrollpunkt 22 (Fig. 6 und 7) weist einen Mantel 61 und eine übliche Strassenkappe 62 auf. Im Verlauf der durch den Kontrollpunkt 22 hindurchgeführten Rohrleitung befindet sich eine Messeinrichtung, wie beispielsweise ein Wasserzähler 63, weiter ist eine Messtafel 42 mit Messgerät 54 und Signalgeber 55 an der Wand des Mantels 61 vorgesehen. Die Durchführung der Rohrleitung durch den Mantel 61 weist ebenfalls die Rostschutzeinrichtung 46 auf. Weiter kann gegebenenfalls auch ein Kontaktstreifen 45 vorgesehen sein. Der Kontrollpunkt 22 bzw. dessen Mantel 61 kann einen fest angebrachten Boden besitzen, kann aber auch wie dargestellt in einen Betonsockel 65 eingesetzt sein.

Wie bereits erläutert, ist eine bestimmte Verteilung der Kontrollstellen bzw. Kontrollpunkte 10, 11, 18, 22 im gesamten Wassernetz 2 zweckmässig. Dies kann schrittweise durchgeführt werden, wobei insbesondere dann, wenn bereits bestehende Lecks schrittweise in der erläuterten Weise beseitigt werden, die Messeinrichtungen und Messgeräte an den einzelnen Kontrollstellen bzw. Kontrollpunkten 10, 11, 18, 22 gegebenenfalls gegen andere ausgetauscht werden müssen, da sich aufgrund der Beseitigung von Lecks die Durchflusseigenschaften auch dort ändern können.

Die Messung während der Messzeit kann dabei so durchgeführt werden, dass die Messung zentralgesteuert ausgelöst wird oder dass die Auslösung in jedem Messschacht für sich erfolgt. Wesentlich ist, dass die Messwerterfassung und gegebenenfalls die Messwertübertragung lediglich während des kurzen Messzeitraums, der für alle Kontrollstellen gleich ist, erfolgt.

Zusätzlich zur Feststellung von Lecks und deren Ortung können ausserdem aufgrund der Messergebnisse in einigen Fällen Beschwerden von Abnehmern schneller behandelt werden. Darüber hinaus kann die Kontrolle der Gesamtwasserabnahme der Wasseraufbereitung und -abgabe des Wasserverbrauches usw. für betriebswirtschaftliche Zwecke für Abrechnung und Kostenkontrolle in wesentlich kürzeren Zeitabständen als derzeit üblich erfolgen, selbst wenn die tatsächliche Abrechnung gegenüber dem Abnehmer im allgemeinen lediglich einmal jährlich erfolgt. Weiter können selbstverständlich zusätzlich auch Messgeräte vorgesehen werden, die das Wasser hinsichtlich seiner Qualität untersuchen.

Die Erfindung ist selbstverständlich nicht auf die Anwendung auf Trinkwasserleitungsnetze beschränkt. Die Erfindung ist beispielsweise auch anwendbar auf Abwassernetze und Fernwärmenetze, d.h. allgemein auf vermaschte Versorgungs- und Entsorgungsnetze, bei denen ein Leck zwar keine Verseuchung der Umwelt verursacht, dessen baldige Erfassung aber aus wirtschaftlichen Gründen erwünscht ist.

Durch das erfindungsgemässe Verfahren ist es möglich, auf realtiv schnelle Weise Lecks in öffentlichen Rohrleitungsnetzen auf vergleichsweise kostengünstige Weise festzustellen. Die bei Trinkwasserleitungsnetzen üblichen und bisher in Kauf genommenen Verluste von weit über 10% können stark verringert werden, so dass die Investitionskosten, die kurzfristig, nämlich bei der Einführung des Verfahrens, hoch sein mögen, in relativ kurzer Zeit amortisiert sind. Dabei ist insbesondere zu berücksichtigen, dass das Trinkwasser auf kostspielige Weise erst aufbereitet werden oder fremdbezogen werden muss. Beides ist mit erheblichen Kosten verbunden. Falls nun, wie durch das erfindungsgemässe Verfahren, sowohl neu entstehende als auch bereits alte, bestehende Lecks, noch dazu mit einer Leckrate, die deutlich unter der bisher erfassbaren liegt, erfasst werden können, können Kosten in erheblicher Höhe eingespart werden. Darüber hinaus sind die Lecks sehr schnell erfassbar. Dadurch können auch die Verbrauchskosten des einzelnen, der ja für die Lecks nicht verantwortlich ist, langfristig gesehen verringert werden, da der Verbraucher bisher an den Verlusten durch Lecks einerseits über den Wasserverkaufspreis, andersets über öffentliche Abgaben (Steuern), die zum Ausgleich von derartigen finanziellen Verlusten der Wasserwerke verwendet werden, beteiligt ist.

**Patentansprüche**

1. Verfahren zur Überprüfung eines vermaschten Leitungsnetzes, wie insbesondere eines öffentlichen Trinkwasserleitungsnetzes, auf Leckverluste, bei dem Unter-Leitungsnetze gebildet werden und mindestens eine Durchflusseigenschaft an Kontrollstellen für das Unter-Leitungsnetz zu bestimmten Zeiten über einen Messzeitraum automatisch aufgezeichnet und ausgewertet wird und bei dem, ausgehend davon, dann festgestellte Lecks in den Unter-Leitungsnetzen durch gezielte Mess- und Ortungsmassnahmen geortet werden, dadurch gekennzeichnet, dass die Kontrollstellen ortsfest über das Leitungsnetz verteilt angeordnet werden und dass die Durchflusseigenschaft an allen Kontrollstellen während solcher Zeiten, während denen die regelmässig gemessene Durchflusseigenschaft über längere Zeiträume im wesentlichen konstant bleibt, im wesentlichen gleichzeitig und während eines stets gleichen Messzeitraums von etwa einer halben Stunde täglich oder mindestens einmal wöchentlich erfasst wird.

2. Verfahren nach Anspruch 1, dadurch gekennzeichnet, dass ausgehend von der Auswertung der Durchflusseigenschaft zum schrittweisen Übergang zur Feinortung weitere Kontrollstellen im Leitungsnetz bzw. Unter-Leitungsnetz bestimmt werden, die bei Feststellung eines Lecks im Unter-Leitungsnetz zusätzlich zur Erkennung und Ortung des Lecks ständig und kontinuierlich überwacht werden.

3. Verfahren nach Anspruch 1 oder 2, dadurch gekennzeichnet, dass als Kontrollstellen bevorzugt solche Stellen des Leitungsnetzes gewählt werden, an denen regelmässig eine Durchflussrichtungsumkehr stattfindet.

4. Verfahren nach einem der Ansprüche 1 bis 3, dadurch gekennzeichnet, dass die Messwerte in eine Zentrale fernübertragen werden und dort aufgezeichnet und ausgewertet werden.

5. Verfahren nach einem der Ansprüche 1 bis 4, dadurch gekennzeichnet, dass die Messwerte an den Kontrollstellen aufgezeichnet werden.

6. Verfahren nach einem der Ansprüche 1 bis 5, dadurch gekennzeichnet, dass bestehende ortsfeste Einrichtungen wie Hydranten und Rohrschächte zur Bildung von Kontrollstellen umgerüstet werden.

7. Verfahren nach einem der Ansprüche 1 bis 6, dadurch gekennzeichnet, dass zur schnellen Ortung von Lecks im Leitungsnetz gezielte Änderungen der Durchflusseigenschaft künstlich erzeugt werden.

8. Verfahren nach einem der Ansprüche 1 bis 7, dadurch gekennzeichnet, dass die Erfassung der Durchflusseigenschaft fernbetätigt ausgelöst wird.

9. In ein vermaschtes Leitungsnetz ortsfest einbaubarer vorgefertigter Messschacht zur Bildung einer Kontrollstelle zur Durchführung des Verfahrens nach einem der Ansprüche 1 bis 8, dadurch gekennzeichnet, dass, wie an sich bekannt, ein Mantel (31 bis 33, 61), ein den Mantel (31 bis 33, 61) nach oben dicht abschliessender Deckel (37, 57, 62), ggf. ein Boden (34, 65), der mit dem Mantel (31 bis 33, 61) dicht verbindbar ist, und Durchführungen (46) für den Eintritt und den Austritt einer zu überwachenden Leitung (51) des Leitungsnetzes (2) vorgesehen sind, dass die Durchführungen (46) abgedichtet sind, dass eine Messtafel (42) oder ein Instrumentenkasten an der Innenwand des Mantels (31 bis 33, 61) angebracht ist, und dass mindestens ein Messgerät (54) an der Messtafel (42) bzw. in dem Instrumentenkasten mit einem zwischen eintretender und austretender Leitung angeordneten Messfühler (48, 56, 63) von Durchflusseigenschaften und/oder einem Signalgeber (55) eines Durchflussmessers verbunden ist.

10. Messschacht nach Anspruch 9, gekennzeichnet durch einen mit dem Messgerät (54) verbundenen Messwertsender (55).

11. Messschacht nach Anspruch 9 oder 10, dadurch gekennzeichnet, dass zum Erreichen eines Raums für empfindliche Messeinrichtungen der Deckel (37, 57) zweiteilig ausgebildet ist, wobei ein unterer Teil (37) den Innenraum des Messschachtes über eine Ringdichtung (38), die mit dem Mantel (31 bis 33) verbunden ist, nach aussen derart abschliesst, dass ein Wassereintritt in den Innenraum weitgehend vermieden ist.

12. Messschacht nach einem der Ansprüche 9 bis 11, gekennzeichnet durch eine autonome Stromversorgung des Messgerätes (54), ggf. des Messwertsenders (55) und ggf. der Messfühler (48, 56, 63).

13. Messschacht nach einem der Ansprüche 9 bis 12, dadurch gekennzeichnet, dass das Signal von dem Messgerät (54), dem Messfühler (48, 56, 63) und/oder dem Signalgeber (55) zur Vorort-Ablesung aus dem Messschacht herausführbar ist.

## Claims

1. A method for checking an interconnected pipeline distribution network, in particular a public drinking water network, for losses resulting from leaks, said pipe distribution network being comprised of sub-networks and in which at least one flow property is in an automatic manner recorded and analyzed at check sites for the sub-networks at given times over a test-time interval, and in which leaks detected in the sub-networks are then localized by specific test and localization procedures, characterized in that the check sites are distributed across the pipeline distribution network in a spatially fixed arrangement, and that the flow property is measured substantially at the same time and during an always equel time interval of about half an hour every day or at least once a week at all checks sites at those times during which the regularly measured flow property remains essentially constant over longer periods of time.

2. A method according to claim 1, characterized in that on the basis of the analysis of the flow property for the stepwise passing to the pinpoint localization additional check sites are determined in the pipeline distribution network resp. sub-network, which are constantly and continuously monitored for additionally detecting and localizing the leak when a leak has been ascertained in the sub-network.

3. A method according to claim 1 or 2, characterized in that one preferably selects check sites a locations in the distribution network, at which a regular reversal of the direction of flow takes place.

4. A method according to one of the claims 1 to 3, characterized in that the test values are transmitted to a remote control station, wherein they are recorded and analyzed.

5. A method according to one of the claims 1 to 4, characterized in that the test values are recorded at the check sites.

6. A method according to one of the claims 1 to 5, characterized in that existing immobile devices such as hydrants and pipe wells are adapted to form check sites.

7. A method according to one of the claims 1 to 8, characterised in that exact changes of the flow property are artificially generated for the purpose of rapidly localizing leaks in the pipe distribution network.

8. A method according to one of the claims 1 to 7, characterized in that the recording of the flow property is initiated by a remote control.

9. A prefabricated measuring shaft adapted for being integrated in an immobile manner into an interconnected pipeline distribution network, in order to form a check site for implementing the method according to one of the claims 1 to 8, characterized in that, as known per se, there are provided a casing (31 to 33, 61), a cover (37, 57, 62) for hermetically sealing the casing (31 to 33, 61) towards the top, if the case maybe a bottom (34, 35) which is hermetically connectable with said casing (31 to 33, 61), and passage openings (46) for the inlet and outlet of a pipeline (51) to be checked in the pipeline distribution network (2), that the passage openings (46) are sealed, that a test panel (42) or an instrument box is mounted at the inside wall of the casing (31 to 33, 61), that at least one test instrument (54) at the test panel (42) and in the instrument box respectively is connected to a flow-property test sensor (48, 56, 63) arranged between the inlet and the outlet of the pipe and/or to a signal generator (55) of a flowmeter.

10. A measuring shaft according to claim 9, characterized by a test value transmitter (55) connected to said test instrument (54).

11. A measuring shaft according to claim 9 or 10, characterized in that for defining a space for sensitive measuring devices the cover (37, 57) comprises two parts, wherein a lower part (37) is sealing the inside space of the measuring shaft via an annular seal (38), which is connected with the casing (31 to 33), towards the outside such that a penetration of water into said inside space is prevented to a large extent.

12. A measuring shaft according to one of the claims 9 to 11, characterized by an autonomous power supply for at least one of said test instrument (54) or of said test value transmitter (55) or of said test sensors (48, 56, 63), if provided.

13. A measuring shaft according to one of the claims 9 to 12, characterized in that the signal can be tapped from the test instrument (54), the test sensor (48, 56, 63) and/or the signal generator (55) for a local outside read-out from said measuring shaft.

## Revendications

1. Procédé pour la surveillance d'un réseau de canalisations maillé et plus particulièrement d'un réseau public de distribution d'eau potable pour détecter les fuites, où on forme des sous-réseaux et dans lequel au moins une caractéristique de débit est enregistrée et évaluée automatiquement à des points de contrôle pour le sous-réseau à des moments et pendant un intervalle de temps donnés et où des fuites détectées sur cette base dans les sous-réseaux de la canalisation sont localisées par des mesures métriques et de localisation systématiques, caractérisé en ce que les points de contrôle sont stationnaires et répartis sur tout les réseau (2) de canalisations et que la caractéristique de débit contrôlée est saisie à tous les points de contrôle (9) pendant des périodes où la caractéristique de débit régulièrement mesurée reste pratiquement constante pendant des périodes relativement longues, les mesures étant prises pratiquement en même temps et pendant un laps de temps de 1/2 heure environ, tous les jours ou au moins une fois par semaine.

2. Procédé selon la revendication 1, caractérisé en ce que, sur la base de l'évaluation de la caractéristique de débit observée et pour passer au fur et à mesure à la localisation de précision, d'autres postes de contrôle supplémentaires dans le réseau de canalisations ou dans le sous-réseau sont choisis pour être constamment et continuellement surveillés en cas de détection d'une fuite dans le sous-réseau afin de détecter et de localiser précisément la fuite.

3. Procédé selon la revendication 1 ou 2, caractérisé en ce qu'on choisit de préférence comme points de contrôle des endroits du réseau de canalisation où une inversion de la direction d'écoulement a régulièrement lieu.

4. Procédé selon l'une quelconque des revendications précédentes, caractérisé en ce que les valeurs mesurées sont télécommuniquées à une centrale et y sont enregistrées et évaluées.

5. Procédé selon l'une quelconque des revendications précédentes, caractérisé en ce que les valeurs mesurées sont enregistrées au point de contrôle.

6. Procédé selon l'une quelconque des revendications précédentes, caractérisé en ce que des dispositifs stationnaires, tels que des prises d'eau et des puits de visite sont transformés en postes de contrôle.

7. Procédé selon l'une quelconque des revendications précédentes, caractérisé en ce que, pour la localisation rapide des fuites dans le réseau de canalisations, des modifications systématiques de la caractéristique de débit sont produites artificiellement.

8. Procédé selon l'une quelconque des revendications précédentes, caractérisé en ce que la mesure de la caractéristique de débit est déclanchée par télécommande.

9. Puits de mesure préfabriqué, prêt à être incorporé en position fixe dans un réseau de canalisation pour former un poste de contrôle destiné à la mise en oeuvre du procédé selon l'une quelconque des revendications précédentes, caractérisé en ce qu'il comporte de manière connue en soi une paroi périphérique ou chemise (31 à 33, 61), un couvercle (37, 57, 62) qui la ferme hermétiquement vers le haut et éventuellement un fond (34, 65) qui peut être relié de manière étanche à la paroi périphérique (31 à 33, 61), ainsi que des passages (46) pour l'entrée et la sortie d'une conduite (51), qui fait partie du réseau de canalisations (2) à surveiller, lesdits passages étant étoupés, en ce qu'un panneau de mesure (42) ou un coffret d'appareillage est fixé à la paroi intérieure de la chemise (31 à 33, 61) et en ce qu'au moins un appareil de mesure (54) du panneau de mesure (42) ou logé dans le coffret d'appareillage est relié à un capteur de mesure (48, 56, 63) des propriétés de débit et/ou à un émetteur de signaux (55) d'un débitmètre.

10. Puits de mesure selon la revendication 9, caractérisé en ce qu'il comporte un transmetteur de valeurs de mesure (55) associé à l'instrument de mesure (54).

11. Puits de mesure selon la revendication 9 ou 10, caractérisé en ce que, pour ménager un espace destiné à loger des dispositifs de mesure fragiles, le couvercle (37, 57) peut être réalisé en deux pièces, dont la pièce inférieure (37) ferme vers l'extérieur l'intérieur du puits de mesure, par l'intermédiaire d'une garniture d'étanchéité annulaire (38) reliée à la chemise (31 à 33), et cela de telle facon que la pénétration d'eau dans l'espace intérieur est évitée pour l'essentiel.

12. Puits de mesure selon l'une quelconque des revendications 9 à 11, caractérisé en ce qu'il comporte une alimentation autonome en courant électrique pour l'instrument de mesure (54) et, le cas échéant, pour le transmetteur des valeurs mesurées (55) et les capteurs de mesure (48, 56, 63).

13. Puits de mesure selon l'une quelconque des revendications 9 à 12, caractérisé en ce que le signal provenant de l'instrument de mesure (54) peut être conduit hors du puits de mesure vers le capteur de mesure (48, 56, 63) et/ou vers le transmetteur des signaux (55) pour la lecture dans un faubourg.

FIG.1

FIG.2

FIG. 3

FIG.5

FIG.4

FIG.6

FIG.7